(19) Europäisches Patentamt
European Patent Office
Office européen des brevets

(11) **EP 3 203 838 B1**

(12) **EUROPÄISCHE PATENTSCHRIFT**

(45) Veröffentlichungstag und Bekanntmachung des Hinweises auf die Patenterteilung:
**01.04.2020 Patentblatt 2020/14**

(21) Anmeldenummer: **15771611.9**

(22) Anmeldetag: **01.10.2015**

(51) Int Cl.:
***A01N 25/30*** *(2006.01)* ***A01N 25/04*** *(2006.01)*
***A01P 3/00*** *(2006.01)* ***A01P 7/04*** *(2006.01)*
***A01P 13/00*** *(2006.01)*

(86) Internationale Anmeldenummer:
**PCT/EP2015/072681**

(87) Internationale Veröffentlichungsnummer:
**WO 2016/055344 (14.04.2016 Gazette 2016/15)**

(54) **VERWENDUNG VON HYDROPHOBEN, SELBSTEMULGIERENDEN POLYGLYCERINESTERN ALS ADJUVANTIEN UND ANTI-SPRAY-DRIFT MITTEL**

USE OF HYDROPHOBIC, SELF-EMULSIFYING POLYGLYCEROL ESTERS AS ADJUVANTS AND ANTI-SPRAY DRIFT AGENTS

UTILISATION D'ESTERS DE POLYGLYCÉRINE HYDROPHOBES AUTO-ÉMULSIFIANTS EN TANT QU'ADJUVANTS ET MOYENS D'ANTI-DÉRIVE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.10.2014 EP 14188067**

(43) Veröffentlichungstag der Anmeldung:
**16.08.2017 Patentblatt 2017/33**

(73) Patentinhaber: **Evonik Operations GmbH**
**45128 Essen (DE)**

(72) Erfinder:
- **KLOSTERMANN, Michael**
  **45239 Essen (DE)**
- **VENZMER, Joachim**
  **45239 Essen (DE)**
- **HÄNSEL, Rene**
  **46282 Dorsten (DE)**
- **SIEVERDING, Ewald**
  **55578 St. Johann (DE)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

(56) Entgegenhaltungen:
**EP-A1- 1 787 514**
**EP-A1- 2 181 594**
**EP-A1- 2 420 141**
**WO-A1-2009/111779**
**WO-A1-2012/145177**
**WO-A2-2008/091871**
**WO-A2-2010/051435**

EP 3 203 838 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Zusammensetzungen, enthaltend mindestens einen hydrophoben, zumindest teilweise wasserunlöslichen Polyglycerinester in Kombination mit mindestens einem Emulgator, sowie deren Verwendung.

Im Pflanzenschutz, bei Schädlingsbekämpfungsmitteln und auch im industriellen noncrop Bereich werden oft zur Verbesserung der biologischen Wirksamkeit solcher Pestizide bzw. Pestizidmischungen sogenannte Adjuvantien (oder Adjuvants) oder auch Hilfsmittel bzw. Zusatzstoffe eingesetzt. Die Wirksamkeit wird häufig auch als Effektivität bezeichnet. Das Pesticides Safety Directorate (PSD, der ausführende Bereich der Health and Safety Executive (HSE), einer nicht-staatlichen, öffentlichen Vereinigung in Großbritannien) definiert ein Adjuvant als eine Substanz, die neben Wasser, nicht selbst als Pestizid wirksam ist, aber die Effektivität eines Pestizides erhöht. (http://www.pesticides.gov.uk/guidance/industries/pesticides/topics/pesticideapprovals/legislation/adjuvants-an-introduction). Diese werden entweder der wässrigen Spritzbrühe kurz vor dem Ausbringen und Aufsprühen zugesetzt (als Tankmischungsadditiv) oder direkt in Pflanzenschutzmittelformulierungen eingebaut. Bei der Verwendung des Wortes Adjuvant werden oft in Patenten oder der Literatur als Synonym die Begriffe Tensid oder Netzmittel verwendet, die jedoch viel zu weitreichend sind und eher als Oberbegriff gedeutet werden können. Aufgrund der hier avisierten Verwendung wird auf den Begriff Adjuvant zurückgegriffen.

In der Praxis gibt es zahlreiche Pflanzenschutzwirkstoffe, die nur mit Hilfe von Adjuvants eine akzeptable Effektivität, also eine praxisrelevante Wirkung erreichen. Die Adjuvantien helfen hier die Schwächen des Wirkstoffes auszugleichen, wie zum Beispiel die UV-Empfindlichkeit von Avermectinen (werden durch ultraviolette Strahlung zerstört) oder die Wasserinstabilität von Sulfonylharnstoffen. Neuere Wirkstoffe sind in der Regel nicht wasserlöslich und, um sich daher effektiv auf einem target = Zielorganismus = Pflanzen verbreiten zu können, sind Adjuvantien für die wässrige Sprühbrühe unerlässlich, um auf dem Wege der physikalischen Beeinflussung der wässrigen Lösungen die schlechte Benetzung von Oberflächen auszugleichen. Zudem helfen Adjuvantien technische Anwendungsprobleme, wie geringe Wasseraufwandmengen, unterschiedliche Wasserqualitäten und den Trend erhöhter Auftragsgeschwindigkeiten, zu überwinden. Die Erhöhung der Pestizidwirksamkeit sowie der Ausgleich von Schwächen der Pflanzenschutzmittel durch Adjuvantien, wird allgemein als Effektivitätssteigerung oder Wirkungsverstärkung der Pflanzenschutzmittelanwendung bezeichnet.

Zur Anwendung kommen im Pflanzenschutz, bei der Schädlingsbekämpfung und im industriellen Bereich chemische oder biologische Pflanzenschutzmittel (im Folgenden auch Pestizide genannt) oder Pestizidgemische. Dieses können sein, zum Beispiel Herbizide, Fungizide, Insektizide, Wachstumsregulatoren, Molluskizide, Bakterizide, Viridizide, Mikronährstoffe sowie biologische Pflanzenschutzmittel auf Basis von Naturstoffen oder lebenden oder ver- bzw. bearbeiteten Mikroorganismen. Pestizide Wirkstoffe sind im Zusammenhang mit Ihren Einsatzgebieten z.B. im 'The Pesticide Manual', 14th edition, 2006, The British Crop Protection Council, aufgelistet; biologische Wirkstoffe sind z.B. im 'The Manual of Biocontrol Agents', 2001, The British Crop Protection Council angegeben. Pestizid wird im Weiteren immer als Sammelbegriff verwendet.

In der Praxis werden solche Pflanzenschutzmittel oft einem Tank mit Wasser als Inhalt zugegeben und unter gelindem Rühren in der sogenannten Spritzbrühe verteilt, um die konzentrierte Formulierung des Wirkstoffes vor dem Aussprühen zu verdünnen und den Pflanzen verträglich zu machen. Adjuvantien werden hierbei entweder vor dem Tankmixvorgang in die Pflanzenschutzformulierung mit einformuliert oder als separate Tankmischungsadditive der Spitzbrühe beigemengt.

Zur Bestellung von Agrarflächen werden diese Spritzbrühen über einem Feld zerstäubt. Zerstäubung bedeutet in diesem Zusammenhang die Tröpfchenbildung durch mechanische Einwirkung auf ein flüssiges Medium bevorzugt durch Rotation von Gegenständen und/oder durch Entspannung (Verminderung des Drucks) an kleinen Öffnungen, insbesondere bevorzugt mit Hilfe von Düsen erzeugtes Spray.

Für die Bestellung von Agrarflächen werden in der Regel 100 bis 1000 l Spritzbrühe pro Hektar versprüht. In Ausnahmefällen können diese Grenzen jedoch stark nach oben bzw. unten variieren. In sogenannten *Low-Volume* Applikationen werden so z.B. sehr geringe Volumina bis hin zu 1,5 l/ha versprüht, während bei Applikation mit der sogenannten *Lanzentechnik* sehr hohe Volumina von bis zu 15000 l/ha erreicht werden können. Der Zerstäubungsvorgang kann hierbei entweder aus Höhenlagen, beispielsweise durch das Versprühen von Spritzbrühen aus einem Flugzeug, oder aus erdbodennahen Lagen, beispielsweise durch Versprühen von Spritzbrühen mittels eines an einem Traktor befestigten Spritzgestänges, erfolgen. Andere Geräte, wie Sprühlanzen, oder Rückenspritzen sind auch bekannt für die Ausbringung von Spritzbrühen.

Als Adjuvantien werden häufig synthetische Tenside wie z.B. ethoxylierte Alkohole oder Alkylpolyglykoside eingesetzt. Die Verwendung von wasserlöslichen, hydrophilen Polyglycerinestern als Adjuvantien in Pflanzenschutzformulierungen ist ebenfalls bekannt (WO 2002/034051, US 2006-0264330A1). In der Regel ist diesen Adjuvantien gemein, dass es sich um wasserlösliche hydrophile Substanzen handelt. Darüber hinaus werden häufig alkoxylierte Trisiloxantenside als Adjuvantien eingesetzt, die die statische Oberflächenspannung von Spritzbrühen oder Wasser signifikant stärker erniedrigen, als in der Vergangenheit verwendete organische Tenside wie zum Beispiel Nonylphenolethoxylate.

Trisiloxantenside haben die allgemeine Struktur $Me_3SiO\text{-}SiMeR\text{-}OSiMe_3$, wobei der Rest R ein Polyetherradikal darstellt. Die Verwendung von superspreitenden Trisiloxantensiden, wie z.B. dem BREAK-THRU® S-240, Evonik Industries AG, in Kombination mit einem Pestizid führt zu einer Verbesserung der Pestizidaufnahme durch die Pflanze und allgemein zu einer Steigerung von dessen Wirksamkeit oder dessen Effektivität. In US 6,734,141 wird beschrieben, dass für diese Effektivitätssteigerung speziell eine geringe Oberflächenspannung und nicht unbedingt die Spreitung verantwortlich ist. Unter dem Begriff Oberflächenspannung wird im Stand der Technik die statische Oberflächenspannung verstanden. Beispielsweise liegt bei Trisiloxanen die statische Oberflächenspannung bei ca. 20 bis 25 mN/m. WO 2012/145177 offenbart Tensid-Zusammensetzungen zur Reduzierung von Spray-Drift, wobei eine Mischung aus einem Tensid mit einem niedrigen HLB-Wert und einem Tensid mit einem höheren HLB-Wert vorgeschlagen werden.

Viele Tankmischungsadditive, speziell die oben genannten Ethoxylate oder Alkylpolyglykoside, bringen beim Einrühren Spritzbrühen stark zum Schäumen, welches bei der Anwendung zu Problemen führt.

Ein weiterer Nachteil synthetischer Tenside ist, dass diese Substanzen, um eine Registrierung als Adjuvantien bei den nationalen Behörden zu erlangen, in der Nachweispflicht stehen, keine Rückstände im Boden hervorzurufen. Diese Rückstandsproblematik, die in den meisten Ländern nur für Pestizidwirkstoffe besteht, wird zunehmend auf Adjuvantien angewendet. Darüber hinaus sind im Agrobereich immer mehr toxikologisch unbedenkliche Additiven und Adjuvantien gefordert.

Neben Adjuvantien werden häufige weitere Additive in Pflanzenschutzformulierungen verwendet. Eine Additivklasse, die hierbei in den letzten Jahren besondere Bedeutung gewonnen hat, sind hierbei sogenannte "Spray-Drift-Additive", welche zur Regulierung der Tröpfchengröße während des Versprühens der Pflanzenschutzformulierung eingesetzt werden. Bei gängigen Zerstäubungsverfahren werden in der Regel Tröpfchen mit einer sehr breiten Tröpfchengrößenverteilung erzeugt. Hierbei ist bekannt, dass die Driftfähigkeit der Tröpfchen, d.h. unkontrollierter Transport durch leichte Luftströmungen, mit der Größe der Tröpfchen korreliert und im Falle kleiner Tröpfchen deutlich ausgeprägter ist. In einer Reihe von Feldversuchen, Windtunnelexperimenten sowie mathematischen Modellierungen konnte in diesem Zusammenhang gezeigt werden, dass insbesondere Tröpfchengrößen kleiner 150 μm eine erhöhte Anfälligkeit gegenüber Drift aufweisen und daher verstärkt zu sogenannten "Off-Target"-Deposition neigen (M. E. Teske, A. J. Hewitt, D. L. Valcore, "The Role of Small Droplets in Classifying Drop Size Distributions", ILASS Americas 17th Annual Conference, 2004, Arlington VA). Drift führt zu einer hohen Umweltbelastung für die Umgebung sowie zu ökonomischen Verlusten. Zur Behebung dieses Problems wurde in der Vergangenheit eine Reihe von Additiven zur Driftkontrolle entwickelt. Meist werden der Pflanzenschutzformulierung hochmolekulare, wasserlösliche Polymere als Tank-Mix-Zusatz beigemischt, welche die Viskosität des Sprays erhöhen und so während des Versprühens zur Bildung größerer Tröpfchen führen (siehe zum Beispiel US 2001/0051145, US 2002/0108415 sowie WO 2008/101818 (US 2010/0152048)). Ein Nachteil dieses Ansatzes ist jedoch, dass in der Regel durch erhöhte Viskosität der Pflanzenschutzformulierung oftmals eine nur unzureichende Verteilung des Sprays auf den Pflanzen erzielt werden kann. Darüber hinaus lösen sich entsprechende Polymere oftmals nur langsam während des Tankmixvorgangs. Unzureichend gelöste Polymerrückstände verursachen u.a. eine Verstopfung der Spraydüsen, was zu Problemen während der Sprühvorgangs führt.

US 2012/0065068 beschreibt die Verwendung von ausgewählten tertiären Aminen und Amin-Oxiden als Anti-Drift-Agenzien, wohingegen in US 6797673 B1 über die Verwendung von Lecithinen zur Drift-Kontrolle berichtet. US 2010/0113275 beschreibt eine Reihe von selbstemulgierenden Estern als Anti-Drift-Additive, wobei hier im Detail Alkoxylate auf Oleochemiebasis aufgeführt werden.

Die Verwendung von Polygylcerin-Estern als Anti-Drift-Additive ist im Stand der Technik nicht bekannt.

Eine Aufgabe der vorliegenden Erfindung war es neue Adjuvantien für Pflanzenschutzformulierungen bereitzustellen, welche zumindest einen Nachteil des Standes der Technik überwinden.

Überraschenderweise wurde gefunden, dass selbstemulgierende Zusammensetzungen wie in den Ansprüchen beschrieben diese Aufgabe erfüllen.

Gegenstand der vorliegenden Erfindung sind deshalb Zusammensetzungen, enthaltend mindestens einen hydrophoben, zumindest teilweise wasserunlöslichen Polyglycerinester in Kombination mit mindestens einem Emulgator, dadurch gekennzeichnet, dass sie Polyglycerinester mit einem HLB-Wert kleiner oder gleich 6,5, Emulgatoren mit einem HLB größer gleich 9 und mindestens einen Sorbitanfettsäureester oder ethoxylierten Sorbitanfettsäureester als Emulgator aufweisen.

Ein weiterer Gegenstand der vorliegenden Erfindung ist die Verwendung der erfindungsgemäßen Zusammensetzungen als Additive für Pflanzenschutzformulierungen.

Bevorzugt ist die Verwendung der erfindungsgemäßen Zusammensetzungen als Additive für Pflanzenschutzformulierungen zur Vermeidung von Spray-Drift.

Die erfindungsgemäßen Gegenstände werden nachfolgend beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch

Herausnahmen von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Werden nachfolgend %-Angaben gemacht, so handelt es sich, wenn nicht anders angegeben, um Angaben in Gewichts-%. Bei Zusammensetzungen beziehen sich die %-Angaben, wenn nicht anders angegeben auf die Gesamtzusammensetzung. Werden nachfolgend Mittelwerte angegeben, so handelt es sich, wenn nicht anders angegeben, um Massenmittel (Gewichtsmittel). Werden nachfolgend Messwerte angegeben, so wurden diese Messwerte, wenn nicht anders angegeben, bei einem Druck von 101325 Pa und einer Temperatur von 25 °C ermittelt.

Die Angabe eines Massenverhältnisses von z.B. Komponente (a) zu Komponente (b) von 0,1 bedeutet, dass eine Mischung enthaltend diese beiden Komponenten 10 Gew.-% der Komponente (a) bezogen auf die Massensumme der Komponenten (a) und (b) aufweist.

Teilweise wasserunlöslich bedeutet, dass die Polyglycerinester bei gegebener Temperatur in einer Konzentration von mindestens 0,01 g/l bis zu 20 g/l in Wasser bereits zu einer mit dem menschlichen Auge wahrnehmbaren Trübung führt, bevorzugt in einer Konzentration von mindestens 0,5g/l bis zu 2 g/l zwei Phasen bildet.

Bevorzugterweise wird die Löslichkeit bei einer Temperatur von unter 80°C, bevorzugt unter 70, 60, 50, 40, 30, 29, 28, 27, 26, 25, 24, 23, 22, 21 und unter 20°C bestimmt. Weiterhin wird die Löslichkeit bevorzugt oberhalb von 0°C, mehr bevorzugt oberhalb von 5, 10, 15, 16, 17, 18, 19, 20, 21, 22, 23, 24 und oberhalb von 25°C bestimmt. Mehr bevorzugt wird die Löslichkeit bei Umgebungstemperatur bestimmt. Insbesondere bevorzugt wird die Löslichkeit zwischen 15°C und 30°C, mehr bevorzugt von 20°C bis zu 25°C bestimmt.

Erfindungsgemäß weisen die hydrophoben, zumindest teilweise wasserunlöslichen Polygylcerinester einen HLB-Wert kleiner oder gleich 8, bevorzugt kleiner oder gleich 7 besonders bevorzugt kleiner oder gleich 6,5 auf. Weiterhin bevorzugt ist der HLB-Wert mindestens 0,5, bevorzugt mindestens 1 und insbesondere bevorzugt mindestens 2.

Der HLB-Wert kann nach verschieden Methoden des Standes der Technik bestimmt werden, er ist ein anerkanntes Maß für die Hydrophobie (wikipedia/en: "HLB", 16. Sept. 2014). Bevorzugt wird der HLB-Wert der hydrophoben Polygylcerinester gemäß der Formel

$$\mathrm{HLB} = 20 \cdot \left(1 - \frac{m_l}{m}\right)$$

berechnet, wobei $m_l$ und $m$ die Molmasse des lipophilen Anteils ($m_l$) bzw. die Gesamtmolekülmasse ($m$) des Polyglycerinesters sind.

Die Molmassen werden nach den Methoden des Standes der Technik bestimmt, bevorzugt werden sie massenspektrometrisch bestimmt, die Bestimmung des lipophilen Anteils erfolgt aus den massenspektroskopischen Ergebnissen unter Anwendung der dem Fachmann bekannten stöchiometrischen Regeln.

Bevorzugt enthalten erfindungsgemäßen Zusammensetzungen Polyglycerinester der der allgemeinen Formel 2

$M_a\ D_b\ T_c$ Formel 2

wobei

$M = [C_3H_5(OR)_2O_{1/2}]$
$D = [C_3H_5(OR)_1O_{2/2}]$
$T = [C_3H_5O_{3/2}]$
a = 1 bis 10, bevorzugt 2 bis 3, insbesondere bevorzugt 2
b = 0 bis 10, bevorzugt größer 0 bis 5, insbesondere bevorzugt 1 bis 3,
c= 0 bis 3, bevorzugt 0
wobei bevorzugt die Summe a +b +c gleich 1 bis 20, bevorzugt 2 bis 5 ist,
wobei die Reste R unabhängig voneinander gleiche oder verschiedene Reste der Formel R'-C(O)- oder H sind,
wobei R' ein einwertiger aliphatischer, gesättigter oder ungesättigter Kohlenwasserstoffrest mit 3 bis 39 C-Atomen, bevorzugt 7 bis 21, besonders bevorzugt mit 9 bis 17 Kohlenstoffatomen ist,
wobei mindestens ein Rest R einem Rest der Form R'-C(O)- entspricht.

Mehr bevorzugt enthalten die erfindungsgemäßen Zusammensetzungen Polyglycerinester der allgemeinen Formel 3

$M_x\ D_y\ T_z$ Formel 3

wobei

M = 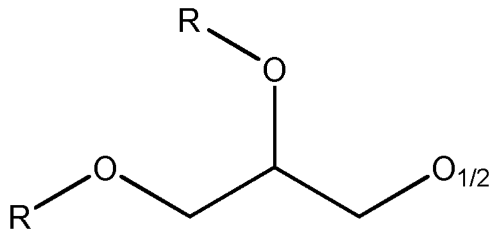

D =

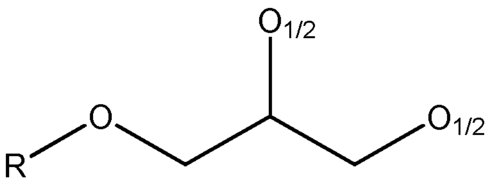

und/oder

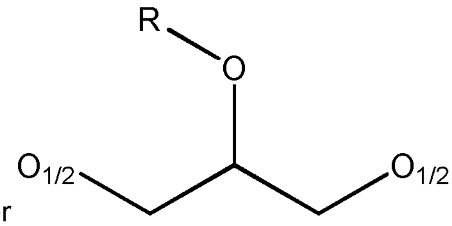

T =

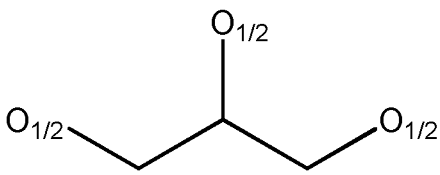

x = 1 bis 10, bevorzugt 2 bis 3, insbesondere bevorzugt 2,
y = 0 bis 10, bevorzugt größer 0 bis 5, insbesondere bevorzugt 1 bis 3,
z = 0 bis 3, bevorzugt 0,
wobei bevorzugt die Summe x + y + z gleich 1 bis 20, bevorzugt 2 bis 5 ist,
unter der Maßgabe, dass mindestens ein Rest R ungleich Wasserstoff ist, weiterhin R wie unter Formel 2 definiert ist.

Weiter mehr bevorzugt enthalten die Polyglycerinester der erfindungsgemäßen Zusammensetzungen der allgemeinen Formel 1

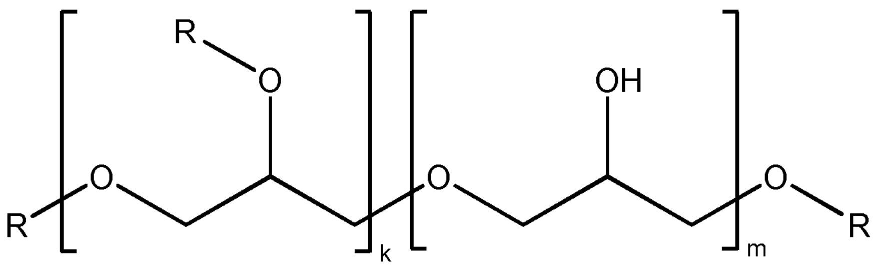

Formel 1

wobei

k = 1 bis 10, bevorzugt 2 bis 3, insbesondere bevorzugt 2,
m = 0 bis 10, bevorzugt größer 0 bis 5, insbesondere bevorzugt 1 bis 3,
unter der Maßgabe, dass mindestens einer der Reste R ein Rest der Form R'-C(O)- ist und dass die Summe k + m 1 bis 20, bevorzugt 2 bis 5 ist und die Fragmente mit den Indices k und m statistisch verteilt sind.

Statistische Verteilungen sind blockweise aufgebaut mit einer beliebigen Anzahl an Blöcken und einer beliebigen Sequenz oder einer randomisierten Verteilung unterliegen, sie können auch alternierend aufgebaut sein oder auch über die Kette einen Gradienten bilden, insbesondere können sie auch alle Mischformen bilden, bei denen gegebenenfalls

Gruppen unterschiedlicher Verteilungen aufeinander folgen können. Spezielle Ausführungen können dazu führen, dass die statistischen Verteilungen durch die Ausführung Beschränkungen erfahren. Für alle Bereiche, die nicht von der Beschränkung betroffen sind, ändert sich die statistische Verteilung nicht.

Bei den Indices der Formeln 1, 2 und 3 handelt es sich um Mittelwerte wie bei Polymeren üblich, bevorzugt sind dies arithmetische Mittelwerte.

Bevorzugt weisen die Polyglycerinester der erfindungsgemäßen Zusammensetzungen mehr als einen Rest R der Form R'-C(O)-, mehr bevorzugt mindestens 2, weiter mehr bevorzugt mindestens 3 auf.

Die Reste R der Form R'-C(O)- sind bevorzugt unabhängig voneinander gleiche oder verschiedene Acylreste von gesättigten oder ungesättigten Fettsäuren, wobei die Fettsäuren 4 bis zu 40 Kohlenstoffatome aufweisen, mehr bevorzugt sind die Fettsäuren ausgewählt aus Buttersäure (Butansäure), Capronsäure (Hexansäure), Caprylsäure (Octansäure), Caprinsäure (Decansäure), Laurinsäure (Dodecansäure), Myristinsäure (Tetradecansäure), Palmitinsäure (Hexadecansäure), Stearinsäure (Octadecansäure), Arachinsäure (Eicosansäure), Behensäure (Docosansäure), Lignocerinsäure (Tetracosansäure), Palmitölsäure ((Z)-9-Hexadecensäure), Ölsäure ((Z)-9-Hexadecensäure), Elaidinsäure ((E)-9-Octadecensäure), cis-Vaccensäure ((Z)-11-Octadecensäure), Linolsäure ((9Z,12Z)-9,12-Octadecadiensäure), alpha-Linolensäure ((9Z,12Z,15Z)-9,12,15-Octadecatriensäure), gamma-Linolensäure ((6Z,9Z,12Z)-6,9,12-Octadecatriensäure), Di-homo-gamma-Linolensäure ((8Z,11Z,14Z)-8,11,14-Eicosatriensäure), Arachidonsäure ((5Z,8Z,11Z,14Z)-5,8,11,14- Eicosatetraensäure), Erucasäure ((Z)-13-Docosensäure), Nervonsäure ((Z)-15-Tetracosensäure), Rizinolsäure, Hydroxystearinsäure und Undecenylsäure, sowie Mischungen, wie z.B. Rapsölsäuren, Soyafettsäuren, Sonnenblumenfettsäuren, Erdnussfettsäuren und Tallölfettsäuren. Besonders bevorzugt sind hierbei Reste von Ölsäure.

Bei der Berechnung des HLB-Werts ergibt sich die die molare Masse des lipophilen Molekülteils aus dem arithmetischen Mittel der Summe der molaren Massen aller im Molekül vorhandenen Reste R'. Die Berechnung der Gesamtmolmasse wird wie oben definiert durchgeführt.

Quellen für geeignete Fettsäuren oder Fettsäureester besonders Glyceride können pflanzliche oder tierische Fett, Öle oder Wachse sein. Beispielsweise können verwendet werden: Schweineschmalz, Rindertalg, Gänsefett, Entenfett, Hühnerfett, Pferdefett, Walöl, Fischöl, Palmöl, Olivenöl, Avokadoöl, Samenkernöle, Kokosöl, Palmkernöl, Kakaobutter, Baumwollsamenöl, Kürbiskernöl, Maiskeimöl, Sonnenblumenöl, Weizenkeimöl, Traubenkernöl, Sesamöl, Leinsamenöl, Sojabohnenöl, Erdnussöl, Lupinöl, Rapsöl, Senföl, Rizinusöl, Jatropaöl, Walnussöl, Jojobaöl, Lecithin z.B. auf Basis von Soja, Raps, oder Sonnenblumen, Knochenöl, Klauenöl, Borretschöl, Lanolin, Emuöl, Hirschtalg, Murmeltieröl, Nerzöl, Distelöl, Hanföl, Kürbisöl, Nachtkerzenöl, Tallöl, sowie Carnaubawachs, Bienenwachs, Candelillawachs, Ouricuriwachs, Zuckerrohrwachs, Retamowachs, Carandaywachs, Raffiawachs, Espartowachs, Alfalfawachs, Bambuswachs, Hempwachs, Douglastannenwachs, Korkwachs, Sisalwachs, Flachswachs, Baumwollwachs, Dammarwachs, Teewachs, Kaffeewachs, Reiswachs, Oleanderwachs, Bienenwachs oder Wollwachs.

Besonders bevorzugt sind die Polyglycerinester der erfindungsgemäßen Zusammensetzungen mit einem HLB von 4 bis 6,5 der Formeln 1, 2 oder 3, wobei die Polyglycerinester im arithmetischen Mittel 2,9 bis 3,1 Reste der Form R'-C(O)-aufweisen.

Weiterhin besonders bevorzugt sind die Polyglycerinester der erfindungsgemäßen Zusammensetzungen mit einem HLB von 4 bis 6,5 der Formel 1, wobei die Summe k + m gleich 3 ist und die im arithmetischen Mittel 2,9 bis 3,1 Reste der Form R'-C(O)-aufweisen.

Mehr besonders bevorzugt sind die Polyglycerinester der erfindungsgemäßen Zusammensetzungen mit einem HLB von 4 bis 6,5 der Formeln 1, 2 oder 3, die im arithmetischen Mittel 2,9 bis 3,1 Reste R der Form R'-C(O)-, wobei die Acylreste von Fettsäuregemischen enthaltend Ölsäure, Stearinsäure, Palmitinsäure und gamma-Linolensäure sind, aufweisen, wobei bevorzugt diese genannten Fettsäuren mindestens 85 Gew.-% im Fettsäuregemisch ausmachen.

Insbesondere bevorzugt sind die Polyglycerinester der erfindungsgemäßen Zusammensetzungen mit einem HLB von 4 bis 6,5 der Formel 1, wobei die Summe k + m gleich 3 ist und die im arithmetischen Mittel 2,9 bis 3,1 Reste der Form R'-C(O)- sind wobei die Acylreste von Fettsäuregemischen enthaltend Ölsäure zu mindestens 70 Gew.-%, bevorzugt mindestens 75 Gew.-%, mehr bevorzugt mindestens 80 Gew.-%, weiter mehr bevorzugt mindestens 85 Gew.-%, besonders bevorzugt mindestens 90 Gew.-% und insbesondere bevorzugt mindestens 95 Gew.-% Ölsäure aufweisen, wobei die Summe aller Fettsäuren 100 Gew.-% ergibt.

Ein weiterer Vorteil der erfindungsgemäßen Zusammensetzungen ist ihre biologische Abbaubarkeit.

Die biologische Abbaubarkeit wird vorzugsweise bestimmt nach der OECD 301 F Methode bestimmt. Mehr bevorzugt wird die biologische Abbaubarkeit nach OECD 301 F nach 28 d bestimmt.

Bevorzugt weisen die Polyglycerinester der erfindungsgemäßen Zusammensetzungen eine biologische Abbaubarkeit von mindestens 50%, weiter mehr bevorzugt von mindestens 55% und insbesondere bevorzugt von mindestens 60% auf, wobei der Höchstwert der biologischen Abbaubarkeit bei 100% liegt.

Die erfindungsgemäßen Zusammensetzungen weisen mindestens einen Sorbitanfettsäureester oder ethoxylierten Sorbitanfettsäureester als Emulgator auf. Bevorzugt ist der Emulgator ein ethoxylierter Sorbitanfettsäureester.

Die Fettsäuren der Sorbitanfettsäureester sind bevorzugt wie die Fettsäuren der Polyglycerinester definiert,

bevorzugt sind die Acylreste von Fettsäuregemischen enthaltend Ölsäure, Stearinsäure, Palmitinsäure und gamma-Linolensäure, wobei bevorzugt diese genannten Fettsäuren mindestens 85 Gew.-% im Fettsäuregemisch ausmachen. Insbesondere bevorzugt sind ethoxylierte Sorbitanfettsäureester, wobei die Acylreste von Fettsäuregemischen enthaltend Ölsäure zu mindestens 70 Gew.-%, bevorzugt mindestens 75 Gew.-%, mehr bevorzugt mindestens 80 Gew.-%, weiter mehr bevorzugt mindestens 85 Gew.-%, besonders bevorzugt mindestens 90 Gew.-% und insbesondere bevorzugt mindestens 95 Gew.-%.

Weiter mehr bevorzugt ist der Emulgator ein ethoxyliertes Sorbitan-trioleat, insbesondere ein Polyethylenglycol - 20 Sorbitan Trioleat.

Erfindungsgemäß zeichnen sich die Emulgatoren dadurch aus, dass sie einen HLB größer gleich 9 bevorzugt größer gleich 10 besonders bevorzugt größer 11 gleich aufweisen. Der HLB wird nach der gleichen Methode bestimmt wie oben zu den Polyglycerinestern beschrieben.

Die Konzentration des Emulgators in den erfindungsgemäßen Zusammensetzungen liegt bevorzugt unterhalb 40 Gew.-%, besonders bevorzugt unterhalb 30 Gew.-%, insbesondere bevorzugt unterhalb 25 Gew.-% und beträgt mindestens 5 Gew.-%, bevorzugt mindestens 10 Gew.-%, mehr bevorzugt mindestens 15 Gew.-%. Dabei sind bevorzugte Konzentrationsbereiche von 5 bis 40 Gew.-%, mehr bevorzugt 10 bis 30 Gew.-% und insbesondere bevorzugt von 15 bis 25 Gew.-%.

Bevorzugt sind die erfindungsgemäßen Zusammensetzungen enthaltend mindestens einen Polyglycerinester mit einem HLB von 4 bis 6,5 der Formeln 1, 2 oder 3, die im arithmetischen Mittel 2,9 bis 3,1 Reste R der Form R'-C(O)-, wobei die Acylreste von Fettsäuregemischen enthaltend Ölsäure, Stearinsäure, Palmitinsäure und gamma-Linolensäure sind,aufweisen, wobei bevorzugt diese genannten Fettsäuren mindestens 85 Gew.-% im Fettsäuregemisch ausmachen und mindestens einen Emulgator mit einem HLB von größer gleich 9, wobei der Emulgator ein ethoxylierter Sorbitanfettsäureester ist.

Ein weiterer Vorteil der erfindungsgemäßen Zusammensetzungen ist die Steigerung der Effektivität von Pestiziden.

Pestizide sind bevorzugt Herbizide, Fungizide, Insektizide, Wachstumsregulatoren, Molluskizide, Bakterizide, Viridizide, Mikronährstoffe sowie biologische Pflanzenschutzmittel auf Basis von Naturstoffen oder lebenden oder ver- bzw. bearbeiteten Mikroorganismen, sowie auch deren Mischungen.

Ein Vorteil der erfindungsgemäßen Zusammensetzung ist, dass diese Zusammensetzungen die Wirksamkeit von Pestiziden erhöhen und gleichzeitig Anti-Spray-Drifteigenschaften aufweisen.

Im Umfang der vorliegenden Erfindung bedeutet selbstemulgierend, dass sich die erfindungsgemäßen Zusammensetzungen ohne großen Schereintrag in Wasser dispergieren lassen und hierbei spontan Emulsionströpfchen mit einer volumengewichteten mittleren Größe < 400 μm bevorzugt, < 200 μm besonders bevorzugt < 100 μm bilden, wobei die Tröpfchen eine mittlere Größe von mindestens 0,1 μm aufweisen.

Die Größe der Emulsionströpfchen wird bevorzugt durch Laserbeugung gemessen, besonders bevorzugt durch Verwendung des MasterSizers 3000 der Firma Malvern.

Bevorzugt werden die Polyglycerinester der erfindungsgemäßen Zusammensetzungen aus natürlichen Rohstoffen hergestellt. Dies ist im Sinne sogenannten nachhaltigen Wirtschaftens vorteilhaft.

Ein weiterer Vorteil der Polyglycerinester ist, dass sie gesundheitlich unbedenklich sind. In vielen Fällen haben sie sogar eine Zulassung als Lebensmittelzusatz, z.B. unter der Nummer E475 (Polyglycerinester von Speisefettsäuren). All dies ist vorteilhalft im Hinblick auf die im Stand der Technik beschrieben Rückstandsproblematik.

Da Adjuvantien des Standes der Technik in der Regel wasserlöslich sind, um so die Wirksamkeit von Pflanzenschutzmitteln aus wässrigen Spritzbrühen zu verbessern, ist es im Lichte des Stands der Technik überraschend, dass ähnliche Effekte auch mit selbstemulgierenden Zusammensetzung enthaltend einen zumindest teilweise wasserunslöslichen, hydrophoben Polygylcerinester sowie mindestens einen Emulgator erzielt werden können.

Bevorzugt werden die erfindungsgemäßen Zusammensetzungen als Tankmischungsadditiv für Spritzbrühen verwendet. Bevorzugte Einsatzkonzentrationen liegen hierbei zwischen 0,001 und 1 Vol.-%, bevorzugt zwischen 0,01 und 0,5 Vol.-% und besonders bevorzugt zwischen 0,02 und 0,15 Vol.-% (ca. entsprechend auch 0,1 Gew.-%) der Spritzbrühe. Dieses ist gleichbedeutend mit 10 bis 3000 ml/ha, wenn üblicherweise 100 bis 1000 l Spritzbrühe pro ha ausgebracht werden und bevorzugt eine Adjuvantmenge von 50 bis 700 ml/ha, die auch von den jeweiligen Spritzbrühmengen unabhängig von der Gesamtwasseraufwandmenge pro ha zugesetzt werden.

Ein weiterer Vorteil der Verwendung der erfindungsgemäßen Zusammensetzungen ist, dass die Adhäsion von Sprays enthaltend Wirkstoffe auf Pflanzenoberflächen, auch auf schwer zu benetzenden Pflanzenoberflächen verbessert wird. Dies führt dazu, dass die Menge an verwendetem Pflanzenschutzmittel zur Bewirtschaftung reduziert werden kann, was sowohl ökologische als auch ökonomische Vorteile hat.

Ein weiterer Vorteil der erfindungsgemäßen Zusammensetzungen ist, dass die Polyglycerinester nicht gelöst, sondern in Form feiner Tröpfchen emulgiert vorliegen, wodurch im Vergleich zu üblicherweise verwendeten wasserlöslichen Adjuvantien Schaumbildung bei der Herstellung von Spritzbrühen reduziert werden kann.

Ein weiterer Vorteil der erfindungsgemäßen Zusammensetzungen ist, dass bedingt durch ihre selbstemulgierenden Eigenschaften sie sich problemlos unter gelindem Rühren in Pflanzenschutzformulierungen und Spritzbrühen einarbeiten lassen. Im Fall von Tankmix-Formulierungen kommt es so beispielsweise schon während des TankmixVorgangs zu einer ausreichend homogenen Verteilung des Polyglycerinesters in der Spritzbrühe. Dies erleichtert zum einen die Anfertigung von Spritzbrühen. Des Weiteren kommt es durch die gute Einarbeitbarkeit und der damit verbundenen homogenen Verteilung während des Sprühvorgangs nicht zu einer Verstopfung der Sprühdüsen.

Aktivstoffe sind solche, die in den individuellen Ländern für die Anwendung auf Pflanzen und Kulturen zugelassen und/oder registriert und/oder gelistet sind, um Pflanzen gegen Schaden zu schützen, oder um den Ertragsverlust durch Schädlinge oder dergleichen bei einer Kultur zu vermeiden, oder um unerwünschten Begleitwuchs, wie Unkräuter und/oder Ungräser auszuschalten, oder um die Pflanze mit Nährstoffen (auch Düngemittel genannt) zu versorgen. Aktivstoffe können synthetischer Art, wie auch biologischer Art sein. Aktivstoffe können auch Extrakte sein, oder Naturstoffe, oder antagonistisch aktive Organismen. Sie werden gewöhnlich auch als Pestizide oder Pflanzenschutzmittel bezeichnet. Generell sind Aktivstoffe zwecks Handhabung und Effizienz in Formulierungen eingearbeitet.

Bevorzugte Aktivstoffe sind ausgewählt aus den chemischen Wirkstoffklassen Strobilurine, Carboxamide, Triazole, Benzophenone, Morpholine, Neonicotinoide, Sulphonylharnstoffe, Wuchsstoffen und Totalherbiziden, sowie deren Kombinationen.

Weiter bevorzugt sind die Aktivstoffe ausgewählt aus Azoxystrobin, Pyraclostrobin Isopyrazam, Epoxyconazole, Difenoconazole, Metrafenon, Fenpropimorph, Thiamethoxam, Rimsulfuron, Dicamba und Glyphosat, sowie deren Kombinationen.

Pflanzenschutzmittelformulierungen werden für ihre Anwendung auf Pflanzen oder Pflanzenteile meist vor dem üblichen Aussprühen über Düsen mit Wasser verdünnt und enthalten neben der wirksamen Komponente auch andere Hilfsmittel, wie Emulgatoren, Dispergierhilfsstoffe, Antifrostmittel, Entschäumer, Biozide und oberflächenaktive Substanzen wie Tenside. Aktivstoffe, insbesondere Fungizide, Insektizide und Nährstoffe können auch allein oder in Kombination und versehen mit obig angegebenen anderen Hilfsmitteln auf Samen (Saatgut) von Pflanzen aufgebracht werden mit verschiedenen Methoden. Solche Methoden werden auch Saatgutbehandlungsmethoden genannt. Die Saatgutbehandlung mit Fungiziden und Insektiziden kann Pflanzen im frühen Stadium des Wachstums vor Krankheiten und Insektenbefall schützen.

Die im Rahmen der Erfindung durchgeführten Freilandversuche zeigen, dass die erfindungsgemäßen Zusammensetzungen eine ertragssteigernde Wirkung für landwirtschaftliche Nutzpflanzen haben. Diese Ertragssteigerung wird sowohl in Kombination mit Aktivstoffen als auch ohne Aktivstoffe erzielt. Weiterhin wurde nachgewiesen, dass die erfindungsgemäßen Zusammensetzungen die Wirkung von Pestiziden deutlich steigern.

Die Beispiele zeigen, dass die Anwendung der erfindungsgemäßen Zusammensetzungen zur Ertragssteigerung landwirtschaftlicher Nutzpflanzen wie auch die Wirkungsverstärkung der Pestizide für eine Vielzahl von Kulturpflanzen erfolgreich ist. Die Wirkung ist an einkeimblättrigen und zweikeimblättrigen Pflanzen gleichermaßen zu beobachten.

Da sich die wirkungsverstärkenden Effekte bei verschiedenen Kulturpflanzen, zweier unterschiedlicher Gruppen (die Verwendung des Begriffs "Gruppe" ist im botanischen Sinne zu verstehen) der Bedecktsamer, sowohl einkeimblättrig als auch zweikeimblättrig, eingestellt haben, kann davon ausgegangen werden, dass die Effekte auch mit anderen Pflanzen möglich sein werden.

Weiterhin ist gezeigt worden, dass die erfindungsgemäßen Zusammensetzungen mit einer Vielzahl unterschiedlicher Pestizide, welche aus sehr unterschiedlichen chemischen Strukturklassen stammen, eine Wirkungsverstärkung bewirken. Es ist anzunehmen, dass auch andere pestizide Aktivstoffe mit den erfindungsgemäßen Zusammensetzungen wirkungsverstärkende Effekte zeigen, wenn die erfindungsgemäßen Zusammensetzungen mit ca. 50 - 500 g /ha Pestizid, insbesondere aber mit 100 - 200 g/ha Pestizid in Kombination eingesetzt werden.

Weiter mehr bevorzugt ist die Verwendung der erfindungsgemäßen Zusammensetzungen zur Steigerung der Wirksamkeit von Pestiziden und gleichzeitig zur Vermeidung von Spray-Drift.

Insbesondere bevorzugt ist die Verwendung der erfindungsgemäßen Zusammensetzungen zur Steigerung der Wirksamkeit von Pestiziden, gleichzeitig zur Vermeidung von Spray-Drift und zur Ertragssteigerung landwirtschaftlicher Nutzpflanzen.

Die Verringerung der Driftfähigkeit der Spraytröpfchen ist vorteilhaft, da so eine Verringerung der Kontamination der Umwelt bewirkt wird. Darüber hinaus kann der Verlust von teuren Wirkstoffen vermieden werden, da diese durch die erfindungsgemäßen Zusammensetzungen zu einem höheren Prozentsatz auf der Target-Fläche ausgebracht werden können.

Unter Drift wird im Umfang der Erfindung die transversale Fortbewegung eines Sprays von seinem Entstehungsort verstanden. Drift wird bevorzugt durch Umwelt- oder/und Umgebungseinflüsse verursacht. Diese Umwelt- oder/und Umgebungseinflüsse sind bevorzugt Wind. Dieser Wind kann natürlichen oder künstlichen Ursprungs sein. Wind künstlichen Ursprungs sind bevorzugt Luftströmungen, die durch die Fortbewegung eines Fahrzeuges zu Lande oder in der Luft entstehen. Bevorzugt sind dies im Falle der Bestellung einer Landwirtschaftsfläche verwendete Fahrzeuge bzw. Flugzeuge.

Das Medium des Sprays ist hierbei in allen Fällen ein wässriges Medium. Bevorzugt entsteht das Spray durch Zerstäubung in der Luft.

Insbesondere bevorzugt wird unter Drift die transversale Fortbewegung eines Sprays vom Ort der Entstehung durch Wind verstanden, wobei das Spray durch Zerstäubung eines wässrigen Mediums in der Luft entstanden ist.

Die Wirksamkeit eines Anti-Drift-Additivs lässt sich bevorzugt durch den Einfluss des Additivs auf die Tröpfchengrößenverteilung des Sprays quantifizieren. Es besteht eine direkte Beziehung zwischen der Größe eines Tröpfchens und seiner Driftneigung - je feiner das Tröpfchen, umso größer die Driftgefahr.

Im Rahmen der vorliegenden Erfindung bezieht sich der Begriff Tröpfchengrößenverteilung auf volumengewichtete Größenverteilungen bei einer Messung der Durchmesser der Tröpfchen im Sprühnebel. Bevorzugt lassen sich volumengewichtet Tröpfchengrößenverteilungen mit Hilfe von Laserbeugungsmessungen (z.B. durch Verwendung von Laserbeugungssystemen der Firma Sympatec oder Malvern gemäß ASTM Methode E2798 und darin verwiesen auf E1260) oder durch die computergestützte Bildauswertung von hochaufgelösten, statischen Aufnahmen des Sprühnebels bestimmen.

Mehr bevorzugt wird die Tröpfchengröße durch Bildauswertung von hochaufgelösten Aufnahmen des Sprays ermittelt. Solche Aufnahmen des Sprays werden bevorzugt mit Hilfe einer hochauflösenden Hochgeschwindigkeits-Kamera erstellt, wobei besonders eine Kamera des Typs Vision Research Phantom V12 bevorzugt ist. Hierfür wird die Kamera 12 cm unterhalb des Düsenausgangs (Flachstrahldüse des Typs XR 11003 der Firma TeeJet) senkrecht zur Sprühlamelle positioniert ist und das Spray bei einer Vergrößerung von 1,15 für min. 20 sec. aufgenommen. Die Ermittlung der Tröpfchengröße erfolgt anschließend durch Bildauswertung von min. 2000 unabhängigen statischen Einzelbildern des Sprays, wie dies in den Beispielen beschrieben ist. Aus derartigen Bestimmungen der Tröpfchengröße werden die Volumina der Tröpfchen ebenfalls bestimmt werden

Die grafische Auftragung des Volumenprozentsatzes über den Tröpfchendurchmesser stellt eine typische Teilchenverteilungskurve dar. Derartige Verteilungen sind in den Abbildungen dieser Erfindung gezeigt. Es lassen sich damit typische Parameter der Verteilung wie z.B. der Volumenanteil der Tröpfchen, welche kleiner sind als ein gewisser Schwellenwert, sowie das Maximum der Verteilung und der mittlere volumetrische Durchmesser (MVD) bestimmen. Der mittlere volumetrische Durchmesser ist hierbei ein zur Klassifizierung von Sprays verwendetes Maß und ist dadurch definiert, dass vom zerstäubten Gesamtvolumen einer Flüssigkeit 50% der Tropfen größer und 50% kleiner als dieser Wert sind. Damit stellt der MVD einen volumenbezogenen Medianwert dar.

Die Tröpfchengrößenverteilung eines Sprays ist von der Zusammensetzung des Sprays sowie von den Bedingungen währenden des Sprühvorgangs abhängig. So haben beispielsweise die Bauart der verwendeten Spritzdüse sowie der gewählte Spritzdruck einen signifikanten Einfluss auf die resultierende Tröpfchengrößenverteilung.

Bevorzugt wird das Spray durch Anwendung von Düsen erzeugt, bevorzugt von Düsen der Bauarten Flachstrahldüsen, Weitwurfflachstrahldüsen, Doppelflachstrahldüsen, Hohlkegeldüsen, Vollkegeldüsen, Hochdruckdüsen, Randdüsen sowie Air-Injektordüsen, mehr bevorzugt sind Düsen der Bauart einer Flachstrahldüse. Derartige Düsen sind z.B. von den Herstellern Lechler, TeeJet und/oder Agrotop erhältlich. Insbesondere bevorzugt sind Flachstrahldüsen der Firma TeeJet, wobei Düsen des Typs XR 11003 ganz besonders bevorzugt sind.

Weiterhin bevorzugt wird ein Druck von 0,5 bis 10 bar, bevorzugt von 0,8 bis 8 bar, mehr bevorzugt von 0,9 bis 6 bar, weiter mehr bevorzugt von 0,95 bis 2,5 bar und insbesondere bevorzugt von 1 bis 1,5 bar zur Sprayerzeugung angewendet.

Der Einfluss der Anti-Drift-Additive auf die Tröpfchengrößenverteilung eines Sprays ist immer relativ bezogen auf ein Spray einer Formulierung, welche sich durch die Abwesenheit dieser Additive bei ansonsten gleichbleibender Zusammensetzung auszeichnet und unter identischen Bedingungen versprüht wird.

Der Zusatz der erfindungsgemäßen Zusammensetzungen zu Pflanzenschutzformulierungen bzw. Spritzbrühen zur Drift-Kontrolle bewirkt bevorzugt eine Abnahme des Volumenanteils von Tröpfchen mit einem Tröpfchendurchmesser kleiner 150 $\mu$m von min. 10 %, bevorzugt 15 %, besonders bevorzugt 20 %, bezogen auf die Tröpfchendurchmesser eines identischen Sprays ohne Zusatz des Anti-Drift-Additives.

Weiterhin bewirkt der Zusatz der erfindungsgemäßen Zusammensetzungen zu Pflanzenschutzformulierungen bzw. Spritzbrühen zur Drift-Kontrolle eine relative Verschiebung des Maximums der Tröpfchengrößenverteilung von min. 5 %, bevorzugt 10 %, besonders bevorzugt 15%, bezogen auf die Tröpfchengrößenverteilung eines identischen Sprays ohne Zusatz des Anti-Drift-Additives.

Weiterhin bewirkt der Zusatz der erfindungsgemäßen Zusammensetzungen zu Pflanzenschutzformulierungen bzw. Spritzbrühen zur Drift-Kontrolle eine relative Zunahme des volumenbezogenen Medians der Tröpfchengrößenverteilung von min. 5 %, bevorzugt 10 %, besonders bevorzugt 15%, bezogen auf die Tröpfchengrößenverteilung eines identischen Sprays ohne Zusatz des Anti-Drift-Additives.

Weiterhin mehr bevorzugt ist die Verwendung erfindungsgemäßen Zusammensetzungen zu Pflanzenschutzformulierungen bzw. Spritzbrühen zur Drift-Kontrolle, wobei der volumenbezogene Median der Tröpfchengrößenverteilung mindestens 5% größer ist als der eines VE Wasser basierten Sprays, wobei das Spray mit einer Flachstrahldüse des Typs XR 11003 der Firma TeeJet bei einem Druck von 1 bar und einer Temperatur von 25 °C erzeugt wird und der

volumenbezogene Median durch Bildauswertung von hochauflösenden Aufnahmen des Sprays bestimmt wird.

Abbildung 1: Volumengewichtete Tröpfchengrößenverteilung eines VE Wassersprays Abbildung 2: Volumengewichtete Tröpfchengrößenverteilung eines VE Wassersprays (Dreiecke) sowie eines Sprays aus Wasser + 0,1 % eines hydrophoben, wasserunlöslichen und selbstemulgierenden Polyglycerinesters.

Beispiele:

Allgemeine Methoden und Materialien:

Substanzen:

In den nachfolgenden Versuchen wurde eine Mischung aus 80 Gew.-% Triglyceryltrioleat mit 20 Gew.-% Polyethylenglycol - 20 Sorbitan Trioleate verwendet und mit Wasser verdünnt.

Sprühversuche:

Alle Sprühversuche wurden mit einer Flachstrahldüse des Typs XR 11003 der Firma TeeJet durchgeführt. Alle Sprühversuche wurden hierbei bei einem Spritzdruck von 1 bar durchgeführt. Die Bestimmung der Tröpfchengröße des resultierenden Sprays erfolgte durch die Bildauswertung von hochaufgelösten Aufnahmen des Sprays. Hierzu wurde eine Hochgeschwindigkeits-Kamera des Typs Vision Research Phantom V12 12 cm unterhalb des Düsenausgangs senkrecht zur Sprühlamelle positioniert und das Spray bei einer Vergrößerung von 1,15 für min. 20 sec. gefilmt. Die Bestimmung der Tröpfchengrößenverteilung erfolgte anschließend durch die Bildauswertung von min. 2000 unabhängigen, statischen Einzelbildern des Sprays. Hierfür wurden die einzelnen Tropfen anhand ihrer vom Hintergrund abweichenden Intensität detektiert. Die projizierte Fläche jedes Tropfens wurde daraufhin aus den aufgenommenen Bildern bestimmt, womit ein äquivalenter Durchmesser berechnet wurde: $D = (4*A/pi)^{0,5}$, wobei D der äquivalente Durchmesser ist und A die projizierte Fläche ist. Als Resultat wurde eine volumengewichtete Tröpfchengrößenverteilung erhalten, mittels welcher das Maximum der Verteilung sowie der mittlere volumetrische Durchmesser (MVD) bestimmt werden können. Diese Bildauswertung erfolgte hierbei durch Anwendung des Computerprogramms Matlab (für Details bzw. Hintergründe siehe z.B. R.C. Gonzalez, S. L. Eddins und R.E. Wood, "Digital Image Processing using Matlab", 2004, Prentice Hall Verlag oder siehe K.J. Hay, Z.-C.- Liu, T. J. Hanratty, "A Backlighted Imaging Technique for Particle Size Measurements in Two Phase Flows", Experiments in Fluids, 1998, 25(3), 226-232).

Bestimmung der Teilchengröße in Emulsionen:

Die Bestimmung der Teilchengröße in Emulsionen erfolgte durch Laserbeugungsmessungen unter Verwendung des Malvern MasterSizers 3000. Die Messungen erfolgten hierbei in verdünnten wässrigen Lösungen. Die Auswertung des Streusignals erfolgte automatisch durch die dem Gerät beigelieferte Software. Als Resultat wurde eine volumengewichtete Partikelgrößenverteilung erhalten. Um sicherzustellen, dass sich durch das Verdünnen die Tröpfchengröße der Emulsion nicht ändert, erfolgte zusätzlich eine Abschätzung der Tröpfchengröße mittels Betrachtung mikroskopischer Aufnahmen der unverdünnten Emulsion.

Vergleichsbeispiel 1: Sprühversuch mit reinem Wasser:

VE Wasser wurde unter den oben beschriebenen Bedingungen zerstäubt. Fig. 1 zeigt die mit Hilfe von Bildauswertung ermittelte volumengewichtete Tröpfchengrößenverteilung.

Das Maximum der Tröpfchengrößenverteilung liegt bei 260 μm. Zudem wird ein mittlerer volumetrischer Durchmesser von 252 μm bestimmt werden.

Erfindungsgemäßes Beispiel 2: Sprühversuch mit Wasser + Polyglycerinester:

Unter gelindem Rühren wurden 0,1 Gewichtsteile der erfindungsgemäßen Zusammensetzung in 99,8 Gewichtsteile Wasser eingearbeitet. Die hierbei erhaltene Emulsion der Entschäumerwirkstoffmischung hatte eine Tröpfchengröße von kleiner 100 μm (ermittelt durch Laserbeugung unter Verwendung eines Malvern MasterSizer 3000). Diese Mischung wurde unter den oben angegeben experimentellen Bedingungen zerstäubt. Abbildung 2 zeigt die mit Hilfe von Hochgeschwindigkeitsvideoaufnahmen ermittelte volumengewichtete Tröpfchengrößenverteilung.

Das Maximum der Tröpfchengrößenverteilung im Vergleich zu VE Wasser verschob sich von 260 μm auf 340 μm verschob. Der MVD verschob sich von 252 μm für reines Wasser auf 351 μm durch das Anti-Drift-Additiv (Fig. 2).

Beispiel 3:Biologische Wirksamkeit:

Feldversuche wurden angelegt, in denen Kulturpflanzen am Beispiel der Getreidearten (Gerste und Weizen), der Leguminose (Soja), der Faserpflanze Baumwolle mit Pflanzenschutzmitteln (PSM) behandelt wurden, um sie gegen Krankheiten zu schützen oder um Insekten zu bekämpfen. Ebenso wurden Feldversuche angelegt, in denen Unkräuter und Ungräser mit einem Totalherbizid (schädigt alle grünen Pflanzen) behandelt wurde, oder mit selektiven Herbiziden (bekämpft nur das Unkraut, ist aber nicht schädigend für die Kulturpflanze. Die Anwendung dieser im Allgemeinen "Pflanzenschutzmittel" genannten Stoffe erfolgte entweder nach Verdünnung mit Wasser allein, oder vermischt im selben Spritzmitteltank mit verschiedenen Dosierungen der erfindungsgemäßen Adjuvantien. Die Anwendung erfolgte zu Zeitpunkten, in denen üblicherweise solche Mittel durch Versprühen ausgebracht werden, um Kulturpflanzen zu schützen oder Unkräuter zu bekämpfen.

Tabelle X: Verwendete Pflanzenschutzmittel der Beispiele 3.1 bis 3.7:

| Code | Handelsbezeichnung | Pestizide (Bestandteil aktive Wirkstoffe) | Hersteller |
|---|---|---|---|
| PSM-1 | Amistar Opti | 250 g/l Azoxystrobin + 500 g/l Chlorothalonil | Syngenta, Basel Schweiz |
| PSM-2 | Capalo | 75 g/l Metrafenon + 62.5 g/l Epoxyconazol + 200 g/l Fenpropimorph | BASF, Ludwigshafen, Deutschland |
| PSM-3 | Seguris | 125 g/l Isopyrazam + 90 g/l Epoxyconazol | Syngenta Basel, Schweiz |
| PSM-4 | Score | 250 g/l Difenoconazole | Syngenta, Basel, Schweiz |
| PSM-5 | Actara | 250 g/kg Thiamethoxam | Syngenta, Basel, Schweiz |
| PSM-6 | Cato Komp. A + Banvel 4S | 250 g/kg Rimsulfuron + 480 g/l Dicamba | DuPont Deutschland Stähler Suisse SA, Zofingen, Schweiz |
| PSM-7 | Roundup | 450 g/l Glyphosate salt | Monsanto, USA |

Die Wirkstoffe gehören zu folgenden chemischen Wirkstoffklassen, die damit repräsentiert werden:

- Strobilurine: Azoxystrobin, Pyraclostrobin
- Carboxamide: Isopyrazam
- Triazole: Epoxyconazole, Difenoconazole
- Benzophenone: Metrafenon
- Morpholine: Fenpropimorph
- Neonicotinoide: Thiamethoxam
- Sulphonylharnstoffe: Rimsulfuron
- Wuchsstoffe: Dicamba
- Totalherbizid: Glyphosate

Tabelle XX: Identität der verwendungsgemäßen Adjuvantien:

| Code | Adjuvant | Zusammensetzung |
|---|---|---|
| ADJ-1 | erfindungsgemäßes Adjuvant | 80% polyglycerolester + 20% Emulgator |
| ADJ-2 | kommerzielles, nicht erfindungsgemäßes Adjuvant | Organo-modifiziertes trisiloxan, BREAK-THRU S240 (Evonik Industries AG, Essen, Deutschland) |

Allgemeine Beschreibung der Feldversuche:

Die Anlage von Feldversuchen zur Prüfung von Fungiziden in Getreidearten oder Leguminosenarten ist dem Fachmann im Prinzip bekannt. Das gleiche gilt für die Anlage von Versuchen zur Prüfung von Insektiziden in Baumwolle und von nicht selektiven Herbiziden (Totalherbizid, welches alle Pflanzen inklusive Kulturpflanze abtötet, wenn die Pflanzen damit in Berührung kommen) und selektiven Herbiziden (töten nicht die Kulturpflanze, wenn sie mit dem Mittel in Berührung kommt, wohl aber das unerwünschte Kraut oder Gras, welches eliminiert werden soll) in Mais und anderen Kulturpflanzen. Hier wird die Vorgehensweise also nur zusammenfassend beschrieben:

In Feldern mit gleichmäßig gewachsenem Getreide (Gerste, Weizen), Leguminosen (Sojabohnen), Baumwolle, Mais, wurden Parzellen von 10 bis 37 $m^2$ in vierfach wiederholten Blöcken randomisiert verteilt. Für die Versuche mit dem Totalherbizid PSM-8 wurden die Grasarten *Brachiaria plantaginea* und *Digitaria horizontalis,* sowie das breitblättrige Unkraut *Acanthospermum hispidum* in Parzellen ausgesät.

Die Pflanzen in den vier Parzellen jeder Behandlung blieben unbehandelt oder wurden mit Pflanzenschutzmitteln (siehe Tabelle X) allein oder in Kombination mit Adjuvantien (siehe Tabelle XX) behandelt. Die Prüfmittel wurden mit Wasser verdünnt (Anwendungszusammensetzung) und in einer Wassermenge von 150 bis 300 l/ha mittels einer Flachstrahldüse, bevorzugt einer Al-Düse auf die Pflanzen ausgebracht. In einigen Fällen wurde die Besprühung im Abstand von 2 bis 4 Wochen wiederholt.

Das Behandlungsergebnis wurde an unterschiedlichen Tagen nach der Besprühung der Pflanzen an einer repräsentativen Anzahl von Pflanzen in jeder Parzelle bestimmt. Der Befall in der unbehandelten Kontrolle wurde ebenfalls bonitiert. Die Ergebnisse der Behandlung werden in den Beispielen als Mittelwert der 4 Parzellen, die in jedem Versuch separat besprüht wurden angegeben.

Das Krankheitsbild durch Pilzbefall wird als Summe der befallenen Flächen durch eine und/oder mehrere Krankheiten angegeben (in % der Blattfläche). Ein niedrigerer Prozentwert in einem Vergleich ist also ein positives Ergebnis.

In den Versuchen mit Insektenbefall wurden an unterschiedlichen Tagen nach der Besprühung jeweils von jeder Parzelle 10 Blätter entnommen. Die Anzahl der Insekten wurde gezählt. Je geringer die Anzahl, umso höher die Wirkung der Mittel. In den Herbizidversuchen wurde die Wirksamkeit der Besprühung so bonitiert, dass die Biomasseproduktion der behandelten Parzellen (m*) zu der Biomasseproduktion in den unbehandelten Parzellen ($m^0$) ins Verhältnis gesetzt wurde und die Wirksamkeit nach

$$\text{Wirkungsgrad} = 1 - (m^*/m^0)$$

berechnet wird. Dabei ist eine 100% Wirksamkeit erreicht, wenn alle Biomasse in der behandelten Parzelle abgetötet wurde, und 0% Wirksamkeit, wenn keinerlei Effekt der Behandlung auf die Biomasse festgestellt wurde. Ein höherer Prozentwert in einem Vergleich ist also ein positives Ergebnis.

Zum Zeitpunkt der Körnerreife der Getreide und der Leguminose die Parzellen jeder Behandlung geerntet und die Korngewichte wurden je Parzelle gewogen. Die Feuchtigkeit der Körner wurde bestimmt und die Erträge pro Parzelle für ein bestimmtes gleichmäßiges Feuchtegewicht berechnet (bei Getreide auf 14% Feuchtigkeit, bei Leguminosen (Sojabohne) auf 9% Feuchtigkeit), um Ungleichmäßigkeiten im Feuchtegewicht zwischen den Einzelparzellen auszugleichen. Danach wurde aus dem Korngewicht auf eine einheitliche Flächengröße von einem Hektar umgerechnet. Ein höherer Ertrag in einem Vergleich ist also ein positives Ergebnis.

Die Infektion mit den Pflanzenpathogenen (Pilzen und Insekten) wurde nicht induziert, sondern fand aus der Umwelt statt.

Beispiel 3.1: Wintergerste:

In einem Feld mit Wintergerste der Sorte "Tenor" wurden bei Wachstumsstadium 41 (alle Blätter voll entwickelt) das PSM-1 und die Adjuvantien ADJ-1 und ADJ-2 mit 200 l/ha Wasser verdünnt und auf die Pflanzen ausgesprüht. Die Pflanzen waren vor der Anwendung mit Echtem Mehltau (verursacht durch den pathogenen Pilz *Blumeria graminis*) und durch Ramularia (verursacht durch den pathogenen Pilz *Ramularia collocygni)* infiziert. Die Krankheitsbilder der Blätter wurden 14 Tage nach der Applikation auf dem zweiten Blatt unter dem Fahnenblatt bestimmt. Die Kornerträge wurden nach der Ernte der Kultur bestimmt. Die Aufwandmengen der Mittel und die Ergebnisse sind in Tabelle A aufgeführt.

Tabelle A: Krankheitsbild der Blätter und Kornertrag nach Beispiel 3.1:

| Behandlung | Krankheitsbild [%] Echter Mehltau | Krankheitsbild (%) Ramularia | Kornertrag [dt/ha] |
|---|---|---|---|
| Unbehandelt | 15 | 17,5 | 47,4 |
| 1,5 ll/ha PSM-1 | 8,5 | 16,3 | 58,6 |
| 1,5 l/ha PSM-1 + 0,25 L/ha ADJ-1 | 6,0 | 9,0 | 64,0 |
| 1,5 l/ha PSM-1 + 0,5 l/ha ADJ-1 | 1,5 | 5,0 | 65,2 |
| 1,5 l/ha PSM-1 + 0,2 l/ha ADJ-2 | 2,0 | 11,8 | 63,9 |

Die Ergebnisse zeigen, dass das Fungizid allein die Krankheitsbilder verringerte. Die Kombination des Fungizides mit der erfindungsgemäßen Zusammensetzung, sowie das Vergleichsadjuvant zeigten eine deutliche Steigerung. Eine höhere Dosierung des ADJ-1 wirkte erwartungsgemäß besser, wobei die höhere Dosierung die Wirkung des Vergleichs übertraf. Die Kornerträge erhöhten sich in gleicher Weise.

Beispiel 3.2: Winterweizen:

In einem Feld mit Winterweizen der Sorte "Akteur" wurden bei Wachstumsstadium 32 (2-Knoten Stadium) und noch einmal bei Wachstumsstadium 51 (alle Blätter voll entwickelt, Beginn Ährenschieben) das PSM-2 und die Adjuvantien ADJ-1 und ADJ-2 mit 200 l/ha Wasser verdünnt und auf die Pflanzen ausgesprüht. Die Pflanzen waren vor der Anwendung durch Septoria-Blattflecken (verursacht durch den pathogenen Pilz *Mycosphaerella graminicola*) infiziert. Die Krankheitsbilder wurden 27 Tage nach der ersten Applikation und 26 Tage nach der zweiten Applikation auf dem ersten Blatt unter dem Fahnenblatt bestimmt. Die Kornerträge wurden nach der Ernte der Kultur bestimmt. Die Aufwandmengen der Mittel und die Ergebnisse sind in Tabelle B aufgeführt.

Tabelle B: Krankheitsbild der Blätter und Kornertrag nach Beispiel 3.2:

| Behandlung | Krankheitsbild [%] Erste Bestimmung | Krankheitsbild (%) Zweite Bestimmung | Kornertrag [dt/ha] |
|---|---|---|---|
| Unbehandelt | 14,0 | 91,3 | 81,8 |
| 1 l/ha PSM-2 | 7,5 | 22,8 | 93,1 |
| 1 l/ha PSM-2 + 0,25 l/ha ADJ-1 | 4,5 | 17,9 | 96,5 |
| 1 l/ha PSM-2 + 0,5 l/ha ADJ-1 | 4,3 | 17,7 | 96,6 |
| 1 l/ha PSM-2 + 0,2 l/ha ADJ-2 | 6,3 | 16,5 | 92,7 |

Die Ergebnisse zeigen, dass das Fungizid allein die Krankheitsbilder zu beiden Boniturzeitpunkten verringerte, sowie den Kornertrag gegenüber der unbehandelten Kontrolle erhöhte. Beide geprüften Adjuvantien verbesserten die Wirksamkeit des Fungizids in Winterweizen. Nur die Anwendung des Fungizides gemeinsam mit der erfindungsgemäßen Zusammensetzung führte zu einer weiteren Ertragserhöhung. Der Erfolg der Anwendung der erfindungsgemäßen Zusammensetzung erscheint dosisunabhängig.

Beispiel 3.3: Winterweizen:

In einem Feld mit Winterweizen der Sorte "Genius" wurden bei Wachstumsstadium 49 (alle Blätter voll entwickelt) das PSM-3 und die Adjuvantien ADJ-1 und ADJ-2 mit 200 l/ha Wasser verdünnt und auf die Pflanzen ausgesprüht. Die Pflanzen waren vor der Anwendung durch Septoria-Blattflecken (verursacht durch den pathogenen Pilz *Mycosphaerella graminicola*) infiziert. Die Krankheitsbilder wurden 37 Tage nach der Applikation auf dem ersten Blatt unter dem Fahnenblatt, und dem Fahnenblatt bestimmt. Die Aufwandmengen der Mittel und die Ergebnisse sind in Tabelle C aufgeführt.

Tabelle C: Krankheitsbild der Blätter nach Beispiel 3.3:

| Behandlung | Krankheitsbild [%] Fahnenblatt | Krankheitsbild (%) Blatt unter Fahnenblatt |
|---|---|---|
| Unbehandelt | 8,8 | 48,8 |
| 0,75 l/ha PSM-3 | 3,4 | 26,7 |
| 0,75 l/ha PSM-3 + 0,5 l/ha ADJ-1 | 3,3 | 20,3 |
| 0,75 l/ha PSM-3 + 0,2 l/ha ADJ-2 | 2,6 | 18,5 |

Die Ergebnisse zeigen, dass das Fungizid allein die Krankheitsbilder auf beiden untersuchten Blättern verringerte. Beide geprüften Adjuvantien verbesserten die Wirksamkeit des Fungizids in Winterweizen weiter besonders auf dem Blatt unter dem Fahnenblatt.

Beispiel 3.4: Sojabohne:

In einem Feld mit Sojabohnen der Sorte "Potencia" bei Wachstumsstadium R3 (erster Ansatz von Schoten) das PSM-4 und die Adjuvantien ADJ-1 und ADJ-2 mit 150 l/ha Wasser verdünnt und auf die Pflanzen ausgesprüht. Die Pflanzen waren vor der Anwendung durch Rost-Befall (verursacht durch den pathogenen Pilz *Phakopsora pachyrhizi*) infiziert. Die Krankheitsbilder wurden 14 und 28 Tage nach der Applikation auf den unteren Blättern der Pflanzen bestimmt. Die Aufwandmengen der Mittel und die Ergebnisse sind in Tabelle D aufgeführt.

Tabelle D: Krankheitsbild der Blätter und Kornertrag nach Beispiel 3.4:

| Behandlung | Krankheitsbild [%] 14 Tage | Krankheitsbild (%) 28 Tage |
|---|---|---|
| Unbehandelt | 11,7 | 42,7 |
| 0,1 l/ha PSM-4 | 8,4 | 34,1 |
| 0,1 l/ha PSM-4 + 0,2 L/ha ADJ-1 | 4,9 | 20,3 |
| 0,1 l/ha PSM-4 + 0,4 L/ha ADJ-1 | 4,5 | 16,0 |
| 0,1 l/ha PSM-4 + 0,2 l/ha ADJ-2 | 4,6 | 22,1 |

Die Ergebnisse zeigen, dass das Fungizid allein die Krankheitsbilder auf den Sojabohnenpflanzen im Vergleich zu den unbehandelten Kontrollen verringerte. Beide geprüften Adjuvantien verbesserten die Wirksamkeit des Fungizids.

Beispiel 3.5: Baumwolle :

In einem Feld mit Baumwoll-Pflanzen der Sorte "Fiber Max" wurden beim Einsetzen der Blüte (Blüten ungeöffnet, Pflanzen sind ca. 70 cm hoch) das PSM-5 und die Adjuvantien ADJ-1 und ADJ-2 mit 150 l/ha Wasser verdünnt und auf die Pflanzen ausgesprüht. Nach dem Antrocknen des Spritzbelages (ca. 1 Stunde nach Applikation) wurde die Hälfte der behandelten Parzellen mit ca. 8 mm/$m^2$ Wasser aus einer Düse besprüht, um so einen Regen zu simulieren. Es sollte festgestellt werden, ob durch das Beregnen das Pflanzenschutzmittel abgewaschen wurde und damit die Wirkung gegen die Insekten verringert würde. Die Anzahl Blattläuse (Aphidae) wurde 7 Tage nach der Applikation auf 10 Blättern pro Parzelle ausgezählt und ist in Tab. E angegeben und die Aufwandmengen der Mittel sind aufgeführt.

Tabelle E: Anzahl Blattläuse je Blatt nach Beispiel 3.5, in Klammern % von unbehandelt:

| Behandlung | Ohne Regen | Nach simuliertem Regen |
|---|---|---|
| Unbehandelt | 18,8 (100) | 13,1 (100) |
| 0,1 kg/ ha PSM-5 | 10,7 (57) | 9,8 (75) |
| 0,1 kg/ ha PSM-5 + 0,2 l/ha ADJ-1 | 9,1 (48) | 7,5 (57) |
| 0,1 kg/ ha PSM-5 + 0,4 l/ha ADJ-1 | 7,2 (38) | 6,5 ((50) |
| 0,1 kg/ ha PSM-5 + 0.2 l/ha ADJ-2 | 9,8 (52) | 7,1 (54) |

Die Ergebnisse zeigen, dass die Ausbringung des Insektizids allein die Anzahl Blattläuse verringerte. Offenbar wurde ein Teil des Insektizids durch Regen abgewaschen, wenn es nicht mit einem Adjuvant kombiniert wurde. Beide Adjuvantien verstärkten die Wirkung des Insektizids, insbesondere das ADJ-1 bei der höheren Dosierung. Relativ verstärkte das ADJ-1 die Regenfestigkeit des Insektizids in ähnlichem Ausmaß, wie das kommerzielle ADJ-2.

Beispiel 3.6: Unkraut in Kultur:

In einem Feld mit Mais im Wachstumsstadium 16 (6 Laubblätter entwickelt), Sorte "Falkone" wurden in Parzellen, in denen gleichmäßig das Ungrass, *Echinochloa crus-galli* (ca. 10 Pflanzen pro $m^2$, mit 2-3 Blättern pro Pflanze) und auch das Unkraut *Chenopodium album* (ca. 10 Pflanzen / $m^2$, ebenfalls mit 2-3 Blättern) auftraten, wurde das PSM-6 allein oder zusammen mit den Adjuvantien ADJ-1 oder ADJ-2 mit 200 l/ha Wasser verdünnt und auf die Pflanzen ausgesprüht. Das PSM-6 besteht aus zwei Komponenten, Rimsulfuron, welches bevorzugt Gräser im Wachstum hemmt, und Dicamba, welches breitblättrige Unkräuter bekämpft. Beide Mittel sind im Mais selektiv, das heißt, das Herbizid führt nicht zu Schäden am Mais. Das Auftreten der beiden Zielunkräuter wurde 52 Tage nach der Besprühung der Pflanzen bonitiert und die Wirkung der Behandlung ins Verhältnis zum Wachstum der Pflanzen in der unbehandelten Kontrolle bonitiert. Der Unkrautbedeckungsgrad der Kontrollfläche war 32% und der Bedeckungsgrad der Behandlungsfläche war 39%. Die Angaben in der Tabelle F drücken den Wirkungsgrad der Behandlung aus. Die Aufwandmengen der Mittel und die Ergebnisse sind in Tabelle F aufgeführt.

Tabelle F: Wirkungsgrade (%) der Behandlung auf dem Gras *Echinochloa crus-galli,* und dem Unkraut *Chenopodium album* nach Beispiel 3.6:

| Behandlung | Wirkungsgrad [%] Gegen Gras | Wirkungsgrad [%] Gegen Unkraut |
|---|---|---|
| PSM- 6 (0,025 kg Cato + 0,25 l Banvel 4S) /ha) | 55 | 65 |
| PSM-6 (0,025 kg Cato + 0,25 l Banvel 4S) /ha) + 0,25 l/ha ADJ-1 | 94 | 95 |
| PSM-6 (0,025 kg Cato + 0,25 l Banvel 4S /ha) + 0,5 l/ha ADJ-1 | 97 | 94 |
| PSM-6 (0,025 kg Cato + 0,25 l Banvel 4S /ha) + 0,2 l/ha ADJ-2 | 91 | 94 |

Die Ergebnisse zeigen, dass beide Adjuvantien die Wirkungsgrade der Herbizidkombination auf über 90% steigern, während die Herbizide alleine nur eine schwache Wirkung hatten. Die Wirkung der erfindungsgemäßen Zusammensetzung erscheint dosisunabhängig.

Beispiel 3.7: Unkraut ohne Kultur, Totalherbizid:

In einem Feld wurden *B. decumbens* und *G. horizontalis,* sowie *A. hispidum* ausgesät. Bei Erreichen einer Wuchshöhe von 30-35 cm (*B. decumbens*), sowie 35-40 cm (*D. horizontalis*), sowie 50-60 cm (*A. hispidum*) wurden die Pflanzen behandelt, mit PSM-7 allein oder zusammen mit Adjuvantien ADJ-1 oder ADJ-2 mit 150 l/ha Wasser verdünnt. Das PSM-7 ist bekanntermaßen nicht sehr regenfest, d.h. wenn kurz nach der Applikation ein Regen fällt, dann geht die Wirkung sehr stark zurück, weil Mittel mit dem Regen von den Pflanzen abgewaschen werden. Um die Regenfestigkeit zu verbessern, können Adjuvantien genutzt werden. Aus diesem Grunde wurden Parzellen doppelt angelegt (mit den jeweiligen 4 Wiederholungen) und 1 Stunde nach der Applikation wurde über einen Zeitraum von 10 Minuten mit einer Düse 8 $mm/m^2$ Wasser versprüht, um Regen zu simulieren. Die Wirksamkeit der Applikationen wurde 30 Tage nach Applikation bonitiert. Die Angaben in der Tabelle G zeigen den Wirkungsgrad der Behandlung. Die Aufwandmengen der Mittel und die Ergebnisse sind in Tabelle G aufgeführt.

Tabelle G: Wirkungsgrade (%) der Behandlung auf den Gräsern *Brachiaria decumbens* (a) und *Digitaria horizontalis* (b), sowie auf der breitblättrigen Pflanze *Acanthospermum hispidum* (c), ohne Regen und nach simuliertem Regen nach Applikation gemäß beispiel 3.7.

| | Behandlung | Wirkungsgrad [%] Ohne Regen | Wirkungsgrad [%] Nach Regen (simuliert) |
|---|---|---|---|
| (a) | 0,75 l/ha PSM- 7 | 79 | 61 |
| | 0,75 l/ha PSM-7 + 0,2 l/ha ADJ-1 | 89 | 74 |
| | 0,75 l/ha PSM-7 + 0,4 l/ha ADJ-1 | 96 | 79 |
| | 0,75 l/ha PSM-7 + 0,2 l/ha ADJ-2 | 85 | 70 |
| (b) | 0,75 l/ha PSM- 7 | 89 | 74 |
| | 0,75 l/ha PSM-7 + 0,2 l/ha ADJ-1 | 94 | 81 |
| | 0,75 l/ha PSM-7 + 0,4 l/ha ADJ-1 | 98 | 84 |
| | 0,75 l/ha PSM-7 + 0,2 l/ha ADJ-2 | 95 | 73 |
| (c) | 0,75 l/ha PSM-7 | 81 | 80 |
| | 0,75 l/ha PSM-7 + 0,2 l/ha ADJ-1 | 98 | 89 |
| | 0,75 l/ha PSM-7 + 0,4 l/ha ADJ-1 | 100 | 94 |

(fortgesetzt)

| Behandlung | Wirkungsgrad [%] Ohne Regen | Wirkungsgrad [%] Nach Regen (simuliert) |
|---|---|---|
| 0,75 l/ha PSM-7 + 0,2 l/ha ADJ-2 | 96 | 76 |

Die Ergebnisse zeigen, dass beide Adjuvantien die Wirkungsgrade des Totalherbizides steigerten. Die erfindungsgemäße Zusammensetzung steigerte die Wirkung des Totalherbizids nach Regen besser als das kommerzielle ADJ-2, insbesondere in der höheren Anwendungsmenge.

**Patentansprüche**

1. Zusammensetzungen, enthaltend mindestens einen hydrophoben, zumindest teilweise wasserunlöslichen Polyglycerinester in Kombination mit mindestens einem Emulgator, **dadurch gekennzeichnet, dass** sie Polyglycerinester mit einem HLB-Wert kleiner oder gleich 6,5, Emulgatoren mit einem HLB größer gleich 9 und mindestens einen Sorbitanfettsäureester oder ethoxylierten Sorbitanfettsäureester als Emulgator aufweisen.

2. Zusammensetzungen nach Anspruch 1 **dadurch gekennzeichnet, dass** sie Polyglycerinester der allgemeinen Formel 2 enthalten

$$M_a D_b T_c \qquad \text{Formel 2}$$

wobei

$M = [C_3H_5(OR)_2O_{1/2}]$
$D = [C_3H_5(OR)_1O_{2/2}]$
$T = [C_3H_5O_{3/2}]$
a = 1 bis 10, bevorzugt 2 bis 3, insbesondere bevorzugt 2
b = 0 bis 10, bevorzugt größer 0 bis 5, insbesondere bevorzugt 1 bis 3,
c= 0 bis 3, bevorzugt 0
wobei bevorzugt die Summe a +b +c gleich 1 bis 20, bevorzugt 2 bis 5 ist,
wobei die Reste R unabhängig voneinander gleiche oder verschiedene Reste der Form R'-C(O)- oder H sind,
wobei R' ein einwertiger aliphatischer, gesättigter oder ungesättigter Kohlenwasserstoffrest mit 3 bis 39 C-Atomen, bevorzugt 7 bis 21, besonders bevorzugt mit 9 bis 17 Kohlenstoffatomen ist,
wobei mindestens ein Rest R einem Rest der Form R'-C(O)- entspricht.

3. Zusammensetzungen nach einem der Ansprüche 1 bis 2 **dadurch gekennzeichnet, dass** sie Polygylcerinester mit einem HLB von 4 bis 6,5 der Formel 2 aufweisen, die im arithmetischen Mittel 2,9 bis 3,1 Reste R der Form R'-C(O)-, wobei die Acylreste von Fettsäuregemischen enthaltend Ölsäure, Stearinsäure, Palmitinsäure und gamma-Linolensäure sind, aufweisen, wobei bevorzugt diese genannten Fettsäuren mindestens 85 Gew.-% im Fettsäuregemisch ausmachen.

4. Zusammensetzungen nach einem der Ansprüche 1 bis 3 **dadurch gekennzeichnet, dass** sie mindestens einen ethoxylierten Sorbitanfettsäureester als Emulgator aufweisen.

5. Verwendung der Zusammensetzungen nach einem der Ansprüche 1 bis 4 als Additive für Pflanzenschutzformulierungen.

6. Verwendung nach Anspruch 5 **dadurch gekennzeichnet, dass** sie zur Vermeidung von Spray-Drift eingesetzt werden.

7. Verwendung nach einem der Ansprüche 5 oder 6 zur Steigerung der Wirksamkeit von Pestiziden und gleichzeitig zur Vermeidung von Spray-Drift.

8. Verwendung nach einem der Ansprüche 5 bis 7 zur Steigerung der Wirksamkeit von Pestiziden, gleichzeitig zur

Vermeidung von Spray-Drift und zur Ertragssteigerung landwirtschaftlicher Nutzpflanzen.

## Claims

1. Compositions comprising at least one hydrophobic, at least partially water-insoluble polyglycerol ester in combination with at least one emulsifier, **characterized in that** they exhibit polyglycerol esters with an HLB value of 6.5 or less, emulsifiers with an HLB of 9 or greater and at least one sorbitan fatty acid ester or ethoxylated sorbitan fatty acid ester as emulsifier.

2. Compositions according to Claim 1, **characterized in that** they comprise polyglycerol esters of the general formula 2

$$M_a\, D_b\, T_c \qquad \text{Formula 2}$$

where

$M = [C_3H_5(OR)_2O_{1/2}]$
$D = [C_3H_5(OR)_1O_{2/2}]$
$T = [C_3H_5O_{3/2}]$
a = 1 to 10, preferably 2 to 3, especially preferably 2,
b = 0 to 10, preferably greater than 0 to 5, especially preferably 1 to 3,
c = 0 to 3, preferably 0,
where preferably the total of a+b+c is 1 to 20, preferably 2 to 5,
where the radicals R independently of one another are identical or different radicals of the form R'-C(O)- or H, where R' is a monovalent aliphatic, saturated or unsaturated hydrocarbon radical having 3 to 39 C atoms, preferably 7 to 21, especially preferably having 9 to 17 carbon atoms,
where at least one radical R corresponds to a radical of the form R'-C(O)-.

3. Compositions according to one of Claims 1 and 2, **characterized in that** they exhibit polyglycerol esters with an HLB of from 4 to 6.5 of the formula 2 which have an arithmetic mean of 2.9 to 3.1 radicals R of the form R'-C(O)-, where the acyl radicals are of fatty acid mixtures comprising oleic acid, stearic acid, palmitic acid and gamma-linolenic acid, where these abovementioned fatty acids preferably amount to at least 85% by weight in the fatty acid mixture.

4. Compositions according to one of Claims 1 to 3, **characterized in that** they include at least one ethoxylated sorbitan fatty acid ester as emulsifier.

5. Use of the compositions according to one of Claims 1 to 4 as additives for crop protection formulations.

6. Use according to Claim 5, **characterized in that** they are employed for avoiding spray drift.

7. Use according to either of Claims 5 and 6 for increasing the activity of pesticides and simultaneously for avoiding spray drift.

8. Use according to one of Claims 5 to 7 for increasing the activity of pesticides, simultaneously for avoiding spray drift and for increasing the yield of agriculturally useful plants.

## Revendications

1. Compositions, contenant au moins un ester de polyglycérine hydrophobe, au moins partiellement insoluble dans l'eau, en combinaison avec au moins un émulsifiant, **caractérisées en ce qu'**elles présentent des esters de polyglycérine dotés d'une valeur de HLB inférieure ou égale à 6,5, des émulsifiants dotés d'un HLB supérieur ou égal à 9 et au moins un ester d'acide gras de sorbitane ou au moins un ester d'acide gras de sorbitane éthoxylé en tant qu'émulsifiant.

2. Compositions selon la revendication 1, **caractérisées en ce qu'**elles contiennent des esters de polyglycérine de formule générale 2

$M_a\ D_b\ T_c$ formule 2

$M = [C_3H_5(OR)_2O_{½}]$
$D = [C_3H_5(OR)_1O_{2/2}]$
$T = [C_3H_5O_{3/2}]$
a = 1 à 10, préférablement 2 à 3, particulièrement préférablement 2
b = 0 à 10, préférablement supérieur à 0 jusqu'à 5, particulièrement préférablement 1 à 3,
c = 0 à 3, préférablement 0
préférablement, la somme a + b + c étant égale à 1 à 20, préférablement 2 à 5,
les radicaux R étant indépendamment les uns des autres des radicaux identiques ou différents de forme R'-C(O)- ou H,
R' étant un radical hydrocarboné monovalent aliphatique, saturé ou insaturé comportant 3 à 39 atomes de C, préférablement 7 à 21, particulièrement préférablement comportant 9 à 17 atomes de carbone,
au moins un radical R correspondant à un radical de forme R'-C(O)-.

3. Compositions selon l'une quelconque des revendications 1 et 2, **caractérisées en ce qu'**elles présentent des esters de polyglycérine de formule 2 dotés d'un HLB de 4 à 6,5, qui présentent, en moyenne arithmétique, 2,9 à 3,1 radicaux R de forme R'-C(O)-, les radicaux acyle étant des mélanges d'acides gras contenant de l'acide oléique, de l'acide stéarique, de l'acide palmitique et de l'acide gamma-linolénique, préférablement ces acides gras mentionnés comptant pour au moins 85 % en poids dans le mélange d'acides gras.

4. Compositions selon l'une quelconque des revendications 1 à 3, **caractérisées en ce qu'**elles présentent au moins un ester d'acide gras de sorbitane éthoxylé en tant qu'émulsifiant.

5. Utilisation des compositions selon l'une quelconque des revendications 1 à 4 en tant qu'additifs pour des formulations phytosanitaires.

6. Utilisation selon la revendication 5, **caractérisée en ce qu'**elle est utilisée pour éviter une dérive de pulvérisation.

7. Utilisation selon l'une quelconque des revendications 5 et 6 pour l'augmentation de l'efficacité de pesticides et en même temps pour éviter une dérive de pulvérisation.

8. Utilisation selon l'une quelconque des revendications 5 à 7 pour l'augmentation de l'efficacité de pesticides, en même temps pour éviter une dérive de pulvérisation et pour l'augmentation de la production de plantes utiles sur le plan agricole.

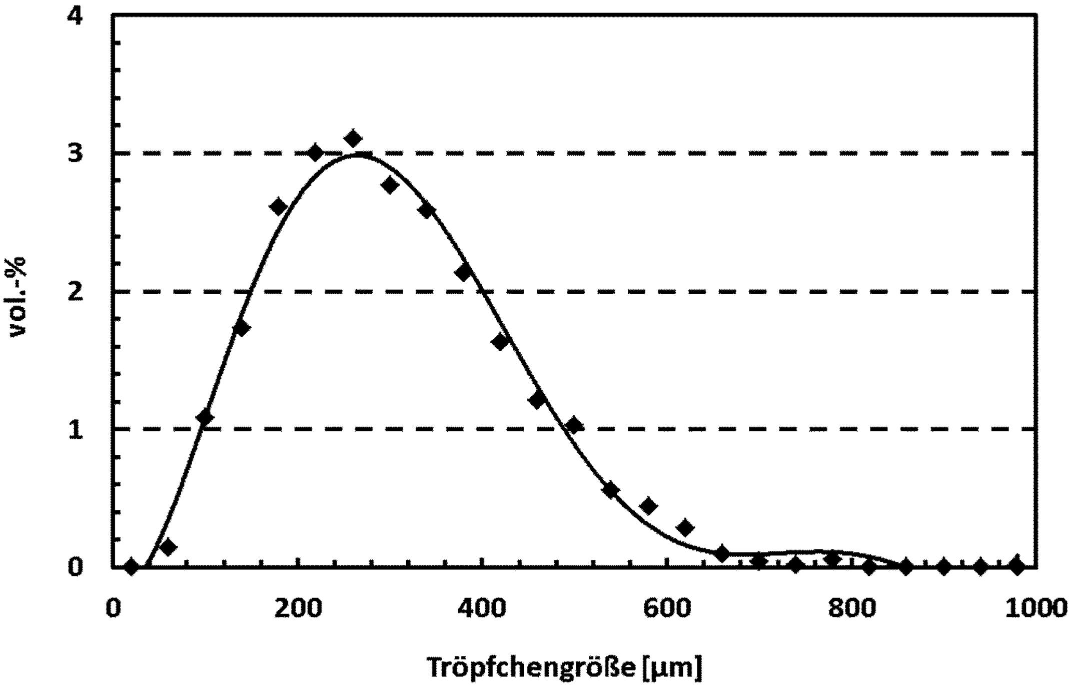


Figur 1

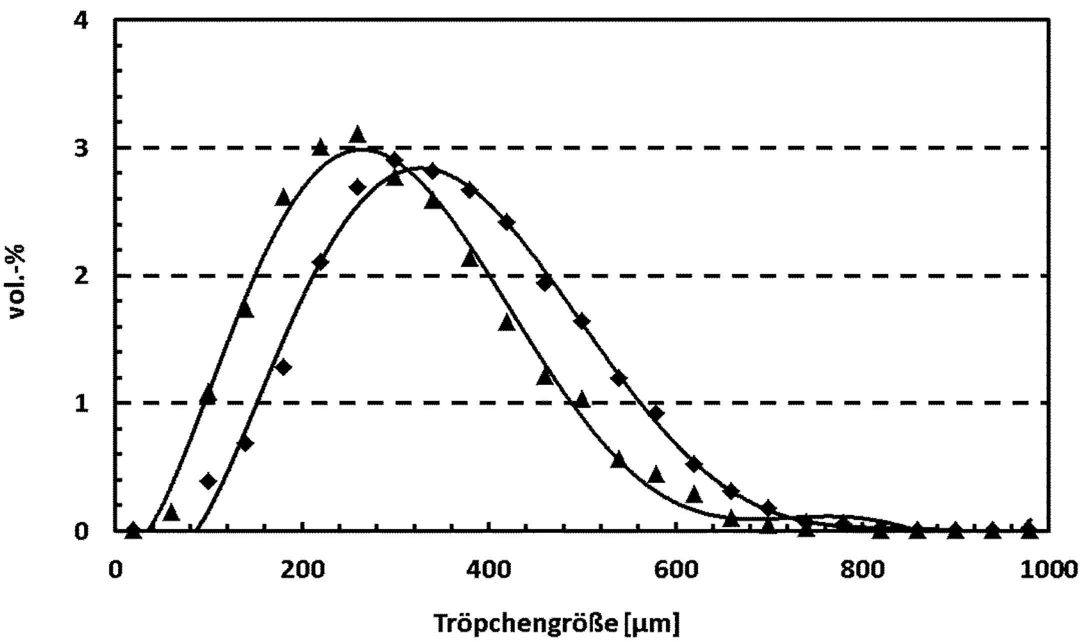


Figur 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2002034051 A
- US 20060264330 A1
- US 6734141 B
- WO 2012145177 A
- US 20010051145 A
- US 20020108415 A
- WO 2008101818 A
- US 20100152048 A
- US 20120065068 A
- US 6797673 B1
- US 20100113275 A


### In der Beschreibung aufgeführte Nicht-Patentliteratur


- The Pesticide Manual. The British Crop Protection Council, 2006
- The Manual of Biocontrol Agents. The British Crop Protection Council angegeben, 2001
- **M. E. TESKE ; A. J. HEWITT ; D. L. VALCORE.** The Role of Small Droplets in Classifying Drop Size Distributions. *ILASS Americas 17th Annual Conference,* 2004
- **R.C. GONZALEZ ; S. L. EDDINS ; R.E. WOOD.** Digital Image Processing using Matlab. Prentice Hall Verlag, 2004
- **K.J. HAY ; Z.-C.- LIU ; T. J. HANRATTY.** A Backlighted Imaging Technique for Particle Size Measurements in Two Phase Flows. *Experiments in Fluids,* 1998, vol. 25 (3), 226-232